# FASCICULE DE BREVET EUROPEEN

(11) **EP 2 023 786 B1**
(45) Date de publication et mention de la délivrance du brevet: **30.06.2010**
(21) Numéro de dépôt: 07765952.2
(22) Date de dépôt: 25.05.2007
(51) Int. Cl.: A47J 43/07

(54) **ENSEMBLE DE TRAVAIL ROTATIF SECURISE POUR APPAREIL ELECTROMENAGER ET/OU ACCESSOIRE DE PREPARATION CULINAIRE**
SICHERHEITSDREHANORDNUNG FÜR EIN ELEKTRISCHES HAUSHALTSGERÄT UND/ODER EINE VORRICHTUNG ZUR ZUBEREITUNG VON LEBENSMITTELN
SAFETY ROTARY WORK ASSEMBLY FOR HOUSEHOLD ELECTRICAL APPLIANCE AND/OR CULINARY PREPARATION ACCESSORY

(30) Priorité: 02.06.2006 FR 0604943
(43) Date de publication de la demande: 18.02.2009
(73) Titulaire: Seb SA, 69130 Ecully (FR)
(72) Inventeur: DAVID, Laurent, F-65390 Bernac Dessus (FR); DURRIS, Cyril, F-65690 Montignac (FR)
(74) Mandataire: Kiehl, Hubert
(86) Numéro de dépôt international: PCT/FR2007/000876
(87) Numéro de publication internationale: WO 2007/141405

(56) Documents cités:
- EP-A- 1 151 708

## Description

La présente invention concerne le domaine technique des appareils électroménagers de préparation culinaire comportant un ensemble de travail entraîné en rotation dans un récipient de travail par un dispositif d'entraînement coopérant avec l'extrémité supérieure de l'ensemble de travail et fermant le récipient de travail.

La présente invention concerne plus particulièrement l'ensemble de travail rotatif. La présente invention concerne aussi un accessoire pour un appareil du type précité, cet accessoire comportant un ensemble de travail rotatif et un récipient de travail fermé par un couvercle. La présente invention concerne également un appareil du type précité.

Des dispositifs de sécurité ont été conçus pour éviter que l'utilisateur puisse accéder à l'outil de travail entraîné en rotation si le récipient de travail n'est pas présent. Ces dispositifs de sécurité présentent généralement l'inconvénient de nécessiter une détection du récipient de travail par le boîtier moteur. Cette détection peut s'effectuer directement, ou par l'intermédiaire d'un couvercle fermant le récipient de travail.

Un appareil de ce type est connu du document EP 1151708 A.

Un but de la présente invention est de proposer un appareil électroménager de préparation culinaire du type précité, présentant un dispositif de sécurité ne nécessitant pas de dispositif de détection du récipient de travail par le boîtier moteur.

Un autre but de la présente invention est de proposer un accessoire pour un appareil électroménager de préparation culinaire du type précité, susceptible d'être utilisé avec un boîtier moteur ne comportant pas de dispositif de détection du récipient de travail.

Un autre but de la présente invention est de proposer un ensemble de travail rotatif pour un appareil électroménager de préparation culinaire du type précité ou pour un accessoire pour un appareil électroménager de préparation culinaire du type précité, susceptible d'être utilisé avec un boîtier moteur ne comportant pas de dispositif de détection du récipient de travail.

Ces buts sont atteints avec un ensemble de travail rotatif comportant un organe d'entraînement supérieur, une enveloppe extérieure tubulaire, un élément interne de sécurité monté mobile axialement dans l'enveloppe extérieure tubulaire contre un moyen de rappel élastique entre une position de repos abaissée et une position relevée, l'élément interne de sécurité présentant une cavité de guidage inférieure, du fait que l'élément interne de sécurité retient axialement l'organe d'entraînement supérieur et que l'organe d'entraînement supérieur est apte à entraîner l'enveloppe extérieure tubulaire lorsque l'élément interne de sécurité occupe la position relevée. En d'autres termes, la mobilité axiale entre l'organe d'entraînement supérieur et l'élément interne de sécurité est inexistante ou est limitée par des butées axiales. La course entre la position de repos abaissée et la position relevée de l'élément interne de sécurité est supérieure au jeu axial éventuel entre l'organe d'entraînement supérieur et l'élément interne de sécurité. Ainsi un déplacement de l'élément interne de sécurité entraîne un déplacement de l'organe d'entraînement supérieur. Un tel déplacement peut intervenir lorsque l'ensemble de travail rotatif est mis en place sur une tige de guidage d'un récipient de travail et qu'un couvercle repousse l'enveloppe extérieure tubulaire contre le moyen de rappel élastique. L'organe d'entraînement supérieur occupe alors une position sortie par rapport à l'enveloppe extérieure tubulaire. En l'absence de la tige de guidage liée au récipient de travail, le moyen de rappel élastique retient l'élément interne de sécurité en position de repos abaissée et l'organe d'entraînement supérieur occupant une position abaissée peut être inaccessible à des moyens d'entraînement. L'utilisateur ne risque pas d'être blessé en essayant de monter l'ensemble de travail rotatif sur les moyens d'entraînement.

Selon un mode de réalisation, l'élément interne de sécurité occupant la position relevée est solidaire en rotation de l'organe d'entraînement supérieur et de l'enveloppe extérieure tubulaire. En d'autres termes, la transmission du mouvement de rotation entre l'organe d'entraînement supérieur et l'enveloppe extérieure tubulaire s'effectue par l'intermédiaire de l'élément interne de sécurité.

Avantageusement alors, l'élément interne de sécurité est monté coulissant dans l'enveloppe extérieure tubulaire. Cette disposition simplifie la liaison entre l'élément interne de sécurité et l'enveloppe extérieure tubulaire.

Avantageusement encore, l'organe d'entraînement supérieur est fixé à l'élément interne de sécurité. Cette disposition simplifie la liaison entre l'élément interne de sécurité et l'organe d'entraînement supérieur. Si désiré, une ou plusieurs pièces peuvent appartenir à la fois à l'organe d'entraînement supérieur et à l'élément interne de sécurité.

Selon un autre mode de réalisation, l'organe d'entraînement supérieur est solidaire en rotation de l'enveloppe extérieure tubulaire lorsque l'élément interne de sécurité occupe la position relevée.

Avantageusement alors, l'organe d'entraînement supérieur est monté coulissant dans l'enveloppe extérieure tubulaire. Cette disposition simplifie la liaison entre l'organe d'entraînement supérieur et l'enveloppe extérieure tubulaire.

Avantageusement encore, l'organe d'entraînement supérieur est monté dans une tête creuse de l'enveloppe extérieure tubulaire. La tête creuse offre une protection latérale pour l'organe d'entraînement supérieur.

Avantageusement encore, l'organe d'entraînement supérieur dépasse de l'enveloppe extérieure tubulaire lorsque l'élément interne de sécurité occupe la position relevée. Cette disposition permet de faciliter l'entraînement de l'organe d'entraînement supérieur.

Avantageusement encore, l'extrémité inférieure de l'élément interne de sécurité occupant la position de repos abaissée est logée dans l'enveloppe extérieure tubulaire. Cette disposition permet d'éviter un actionnement intempestif de l'élément interne de sécurité.

Ces buts sont atteints également avec un accessoire pour appareil électroménager de préparation culinaire, comprenant un récipient de travail comportant un fond présentant une tige de guidage, un ensemble de travail rotatif prévu pour être mis en place sur la tige de guidage, et un couvercle prévu pour fermer le récipient de travail, du fait que l'ensemble de travail rotatif est conforme à l'une au moins des caractéristiques précitées.

Ces buts sont atteints également avec un appareil électroménager de préparation culinaire, comprenant un récipient de travail comportant un fond présentant une tige de guidage, un ensemble de travail rotatif prévu pour être mis en place sur la tige de guidage, un couvercle prévu pour fermer le récipient de travail et un boîtier moteur prévu pour entraîner en rotation l'ensemble de travail rotatif disposé dans le récipient de travail fermé par le couvercle, du fait que l'ensemble de travail rotatif est conforme à l'une au moins des caractéristiques précitées.

Selon une forme de réalisation avantageuse, le boîtier moteur est amovible par rapport au couvercle. Le récipient de travail et le couvercle formant une enceinte recevant des aliments peuvent ainsi être nettoyés plus aisément.

L'invention sera mieux comprise à l'étude de deux exemples de réalisation, pris à titre nullement limitatif, illustré dans les figures annexées, dans lesquelles :
- la figure 1 est une vue en éclaté d'un appareil électroménager de préparation culinaire comportant un accessoire de type mini-hachoir présentant un ensemble de travail rotatif selon un premier exemple de réalisation de l'invention.
- la figure 2 est une vue en coupe verticale de l'ensemble de travail rotatif et du récipient de travail de l'accessoire de type mini-hachoir illustré à la figure 1,
- la figure 3 est une vue en coupe verticale de l'ensemble de travail rotatif, du récipient de travail et du couvercle de l'accessoire de type mini-hachoir illustré à la figure 1,
- la figure 4 est une vue en coupe verticale d'un accessoire de type mini-hachoir comportant un ensemble de travail rotatif selon un deuxième exemple de réalisation de l'invention, un récipient de travail et un couvercle.

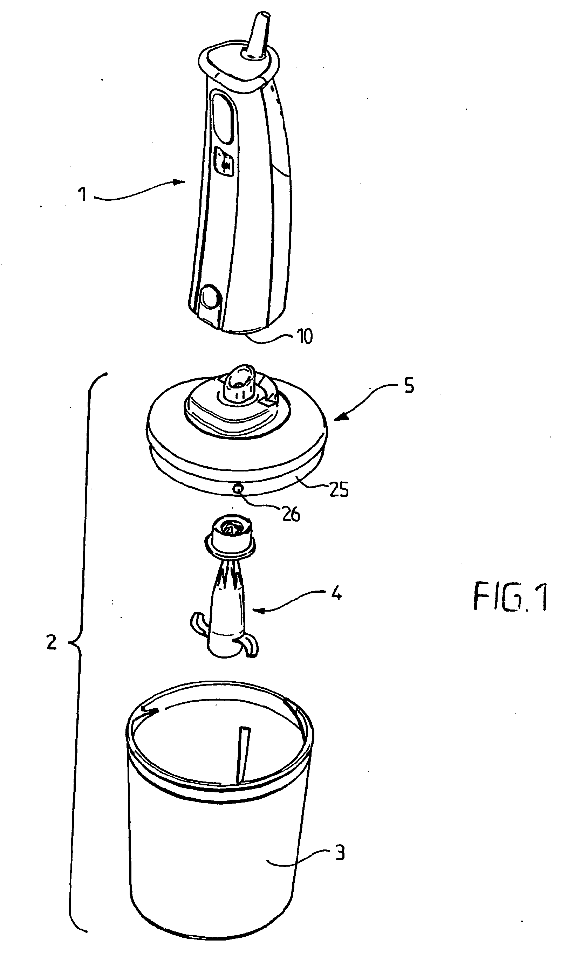

L'appareil électroménager de préparation culinaire illustré à la figure 1 comporte un boîtier moteur 1 et un accessoire 2 de type mini-hachoir.

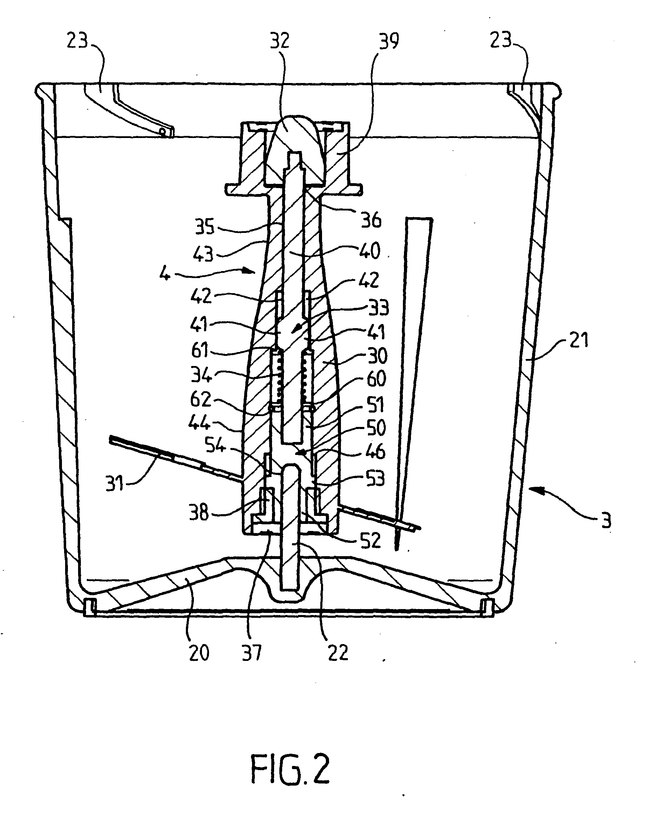

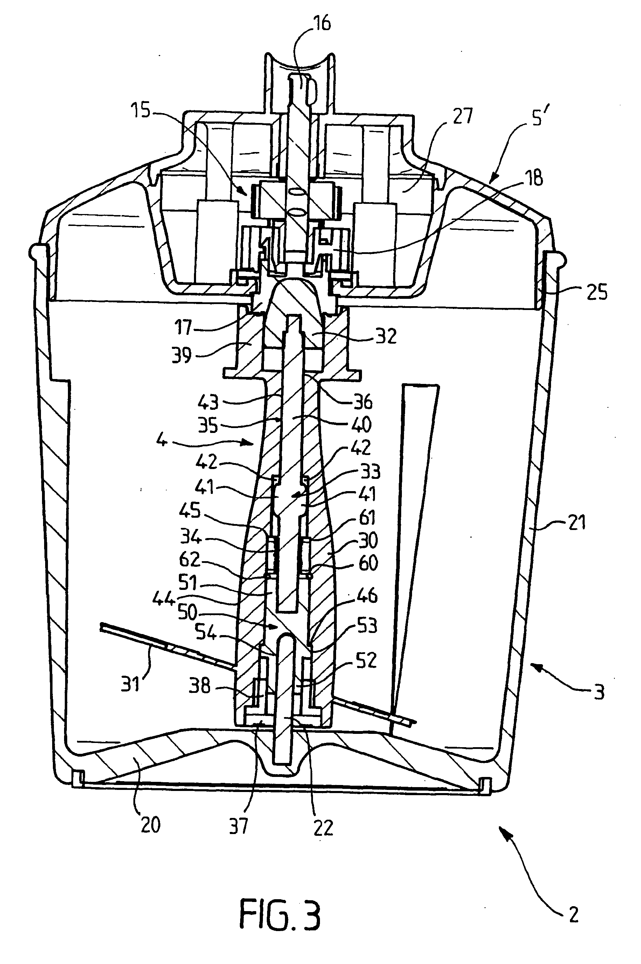

L'accessoire 2 mieux visible sur les figures 2 et 3 comprend un récipient de travail 3, un ensemble de travail rotatif 4 et un couvercle 5.

Le boîtier moteur 1 est prévu pour entraîner en rotation l'ensemble de travail rotatif 4 disposé dans le récipient de travail 3 fermé par le couvercle 5. Le boîtier moteur 1 comporte une sortie d'entraînement 10 prévue pour coopérer avec un mécanisme d'entraînement 15 du couvercle 5, mieux visible sur la figure 3. Le boîtier moteur 1 est amovible par rapport au couvercle 5.

Le récipient de travail 3 comporte un fond 20 raccordé à une paroi latérale 21. Le fond 20 présente une tige de guidage 22 s'étendant dans le récipient de travail 3. Plus particulièrement, la tige de guidage 22 est montée dans la paroi du fond 20. Des encoches 23 ménagées sur la face interne de la paroi latérale 21 permettent de verrouiller le couvercle 5 sur le récipient de travail 3.

L'ensemble de travail rotatif 4 est prévu pour être mis en place sur la tige de guidage 22.

Le couvercle 5 visible sur les figures 1 et 3 est prévu pour fermer le récipient de travail 3. A cet effet le couvercle 5 comporte une jupe 25 munie d'ergots externes 26 prévus pour être insérés dans les encoches 23. Le couvercle 5 forme un logement 27 prévu pour recevoir le mécanisme de transmission 15. Le mécanisme de transmission 15 comporte un organe d'accouplement extérieur 16 prévu pour coopérer avec la sortie d'entraînement 10 du boîtier moteur 1. Le mécanisme de transmission 15 comporte un organe d'accouplement inférieur 17 prévu pour coopérer avec l'ensemble de travail rotatif 4. L'organe d'accouplement extérieur 16 et l'organe d'accouplement inférieur 17 sont avantageusement reliés par un dispositif réducteur 18.

L'ensemble de travail rotatif 4, mieux visible sur les figures 2 et 3, présente une cavité de guidage inférieure 54 prévue pour recevoir la tige de guidage 22 issue du fond 20 du récipient de travail 3. L'ensemble de travail rotatif 4 est prévu pour pivoter par rapport à la tige de guidage 22.

L'ensemble de travail rotatif 4 comporte une enveloppe extérieure tubulaire 30, un outil de travail 31 porté par l'enveloppe extérieure tubulaire 30, un organe d'entraînement supérieur 32 prévu pour coopérer avec l'organe d'accouplement inférieur 17, et un élément interne de sécurité 33. L'outil de travail 31 comporte deux lames. L'élément interne de sécurité 33 présente la cavité de guidage inférieure 54. L'élément interne de sécurité 33 retient axialement l'organe d'entraînement supérieur 32. Plus particulièrement, l'organe d'entraînement supérieur 32 est fixé à l'élément interne de sécurité 33. Ainsi l'élément interne de sécurité 33 occupant la position relevée ou la position abaissée est solidaire en rotation de l'organe d'entraînement supérieur 32. Tel que visible sur les figures 2 et 3, l'organe d'entraînement supérieur 32 est fixé à l'extrémité supérieure de l'élément interne de sécurité 33.

L'élément interne de sécurité 33 est monté mobile axialement dans l'enveloppe extérieure tubulaire 30 contre un moyen de rappel élastique 34 entre une position de repos abaissée représentée à la figure 2 et une position relevée illustrée à la figure 3. Tel que visible sur la figure 2, l'extrémité inférieure de l'élément interne de sécurité 33 occupant la position de repos abaissée est logée dans l'enveloppe extérieure tubulaire 30.

L'enveloppe extérieure tubulaire 30 forme une cavité 35 présentant une ouverture supérieure 36 et une ouverture inférieure 37. L'élément interne de sécurité 33 est monté dans la cavité 35. Une pièce d'obturation annulaire 38 montée dans l'ouverture inférieure 37 permet de retenir l'élément interne de sécurité 33 dans la cavité 35. L'organe d'entraînement supérieur 32 est monté dans une tête creuse 39 de l'enveloppe extérieure tubulaire 30. Tel que visible sur la figure 3, l'organe d'entraînement supérieur 32 dépasse de l'enveloppe extérieure tubulaire 30 lorsque l'élément interne de sécurité 33 occupe la position relevée.

L'élément interne de sécurité 33 comporte une tige de liaison 40 et une pièce d'appui 50. La pièce d'appui 50 présente une section supérieure à la section de la tige de liaison 40. La tige de liaison 40 est fixée à l'organe d'entraînement supérieur 32 et à la pièce d'appui 50. La tige de liaison 40 comporte deux méplats longitudinaux 41. Chacun des méplats longitudinaux 41 est prévu pour coulisser dans une rainure longitudinale 42 ménagée dans la paroi de la cavité 35. Ainsi l'élément interne de sécurité 33 est monté coulissant dans l'enveloppe extérieure tubulaire 30. L'élément interne de sécurité 33 occupant la position relevée ou la position abaissée est solidaire en rotation de l'enveloppe extérieure tubulaire 30.

La tige de liaison 40 est par exemple obtenue à partir d'un axe métallique. La pièce d'appui 50 et/ou l'organe d'entraînement supérieur 32 peuvent notamment être collés ou surmoulés sur la tige de liaison 40.

La cavité 35 comporte une portion supérieure 43 dans lequel coulisse la tige de liaison 40. La cavité 35 comporte une portion inférieure 44 dans laquelle coulisse une partie supérieure 51 de la pièce d'appui 50. La portion supérieure 43 et la portion inférieure 44 de la cavité 35 sont avantageusement cylindriques, le diamètre de la portion supérieure 43 étant inférieur au diamètre de la portion inférieure 44. Les rainures longitudinales 42 sont ménagées dans la partie inférieure de la portion supérieure 43. Les rainures longitudinales 42 débouchent à une extrémité supérieure 45 de la portion inférieure 44.

Le moyen de rappel élastique 34 est monté entre une rondelle inférieure 60 et une rondelle supérieure 61. La rondelle inférieure 60 repose sur un joint annulaire 62 prenant appui sur la face supérieure de la pièce inférieure 50. La rondelle supérieure 61 est plaquée par le moyen de rappel élastique 34 contre l'extrémité supérieure 45 de la portion inférieure 44 de la cavité 35.

La pièce d'appui 50 présente une partie inférieure 52 prévue pour coulisser à l'intérieur de la pièce d'obturation annulaire 38. La pièce d'appui 50 présente une butée 53 prévue pour coopérer avec un appui 46 ménagé dans la cavité 35. La pièce d'appui 50 présente la cavité de guidage inférieure 54 prévue pour coopérer avec la tige de guidage 22.

Le fonctionnement de ce premier exemple de réalisation de la présente invention est le suivant.

L'utilisateur met en place l'ensemble de travail rotatif 4 dans le récipient de travail 3. L'élément interne de sécurité 33 repose sur la tige de guidage 22 engagée dans la cavité de guidage inférieure 54. Le moyen de rappel élastique 34 repousse l'élément interne de sécurité 33 en position abaissée, tel que représenté à la figure 2. L'enveloppe extérieure tubulaire 30 occupe alors une position relevée et l'organe d'entraînement supérieur 32 occupe une position rentrée dans la tête creuse 39 de l'enveloppe extérieure tubulaire 30. L'organe d'accouplement inférieur 17 ne peut coopérer avec l'organe d'entraînement supérieur 32 de l'ensemble de travail rotatif 4.

Lorsque l'utilisateur met en place le couvercle 5 sur le récipient de travail 3 en engageant les ergots extérieurs 26 dans les encoches 23, l'organe d'accouplement inférieur 17 prend appui sur l'organe d'entraînement supérieur 32. La rondelle supérieure 61 comprime le moyen de rappel élastique 34, la rondelle inférieure 60 reposant sur la pièce d'appui 50 soutenue par la tige de guidage 22. L'enveloppe extérieure tubulaire 30 occupe alors une position abaissée et l'élément interne de sécurité 33 occupe une position relevée, tel que représenté à la figure 3. L'organe d'entraînement supérieur 32 occupe une position relevée par rapport à la tête creuse 39 et peut être entraîné en rotation par l'organe d'accouplement inférieur 17 lorsque le boîtier moteur 1 est mis en place sur le couvercle 5.

Lorsque l'utilisateur retire le couvercle 5 du récipient de travail 3, les frottements entre la tête creuse 39 et l'organe d'accouplement inférieur 17 contribuent à freiner l'ensemble de travail rotatif 4.

Si l'utilisateur essaie de mettre en place l'ensemble de travail rotatif 4 contre l'organe d'accouplement inférieur 17, la tête creuse 39 forme une protection en prenant appui contre l'organe d'accouplement inférieur 17. L'organe d'entraînement supérieur 32 ne peut être entraîné par l'organe d'accouplement inférieur 17.

L'organe d'entraînement supérieur 32 est apte à entraîner l'enveloppe extérieure tubulaire 30 lorsque l'élément interne de sécurité 33 occupe la position relevée ou la position de rappel abaissée. Toutefois lorsque l'élément interne de sécurité 33 occupe la position de rappel abaissée, tel qu'illustré à la figure 2, l'organe d'entraînement supérieur 32 occupe une position rentrée dans la tête creuse 39. L'organe d'accouplement inférieur 17 (visible sur la figure 3) ne peut coopérer avec l'organe d'entraînement supérieur 32 occupant la position rentrée.

L'accessoire 2 ainsi proposé ne requiert pas de dispositif de sécurité coopérant avec un dispositif de détection agencé dans le boîtier moteur 1.

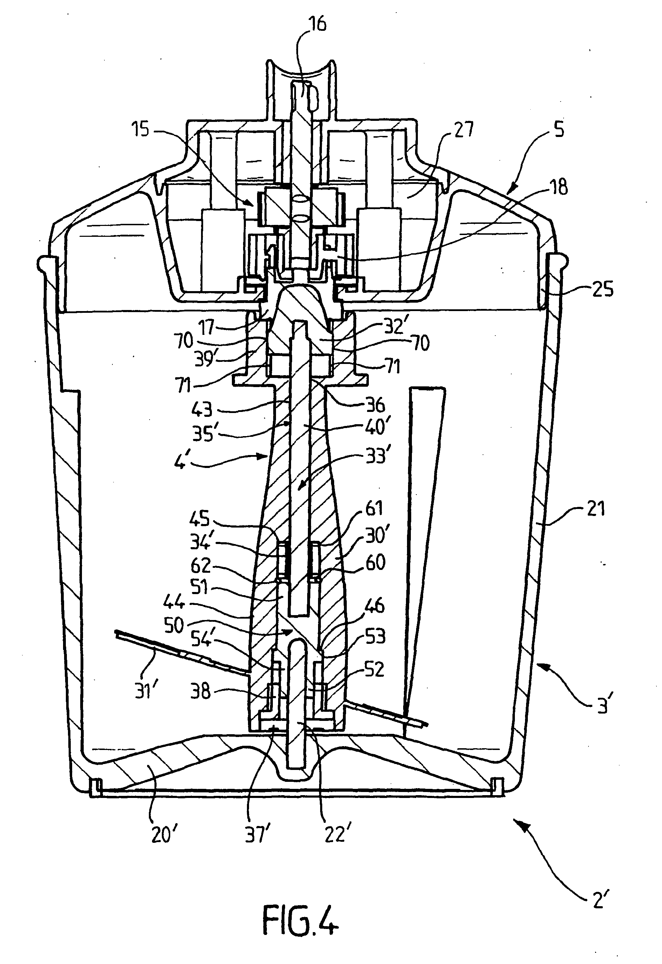

Un deuxième exemple de réalisation d'un ensemble de travail rotatif 4' est illustré à la figure 4. L'ensemble de travail rotatif 4' est utilisé avec un récipient de travail 3' et un couvercle 5' pour former un accessoire 2' pour un appareil électroménager de préparation culinaire. L'accessoire 2' peut être utilisé avec le boîtier moteur 1 pour former un appareil électroménager de préparation culinaire. Le couvercle 5' est identique au couvercle 5.

L'ensemble de travail rotatif 4' comporte une enveloppe extérieure tubulaire 30', un outil de travail 31' porté par l'enveloppe extérieure tubulaire 30', un organe d'entraînement supérieur 32' prévu pour coopérer avec l'organe d'accouplement inférieur 17, et un élément interne de sécurité 33' monté mobile contre un moyen de rappel élastique 34' entre une position de repos abaissée et une position relevée illustrée à la figure 4. L'élément interne de sécurité 33' retient axialement l'organe d'entraînement supérieur 32' et l'organe d'entraînement supérieur 32' est apte à entraîner en rotation l'enveloppe extérieure tubulaire 30' lorsque l'élément interne de sécurité 33' occupe la position relevée.

L'ensemble de travail rotatif 4' diffère toutefois de l'ensemble de travail rotatif 4 selon les caractéristiques suivantes.

L'ensemble de travail rotatif 4' n'est pas nécessairement prévu pour pivoter par rapport à la tige de guidage 22' issue du fond 20' du récipient de travail 3'. La cavité de guidage inférieure 54' ne forme pas nécessairement un logement présentant une géométrie de révolution.

L'élément interne de sécurité 33' retient axialement l'organe d'entraînement supérieur 32' Toutefois l'organe d'entraînement supérieur 32' peut être monté libre en rotation sur l'élément interne de sécurité 33'.

L'élément interne de sécurité 33' est monté mobile axialement dans la cavité 35'. Toutefois la cavité 35' peut être dépourvue de rainure prévue pour bloquer la rotation de l'enveloppe extérieure tubulaire par rapport à l'élément interne de sécurité 33'. La tige de liaison 40' peut être dépourvue de méplats longitudinaux.

L'organe d'entraînement supérieur 32' présente sur sa périphérie au moins une nervure 70 prévue pour coopérer avec une rainure 71 ménagée dans la tête creuse 39' lorsque l'élément interne de sécurité 33' occupe la position relevée illustrée à la figure 4. Ainsi l'organe d'entraînement supérieur 32' est solidaire en rotation de l'enveloppe extérieure tubulaire 30' lorsque l'élément interne de sécurité 33' occupe la position relevée.

L'organe d'entraînement supérieur 32' peut être monté coulissant dans l'enveloppe extérieure tubulaire 30 ', plus particulièrement dans la tête creuse 39'. L'organe d'entraînement supérieur 32' est alors solidaire en rotation de l'enveloppe extérieure tubulaire 30' lorsque l'élément interne de sécurité 33' occupe la position de repos abaissée. Toutefois l'organe d'accouplement inférieur 17 ne peut coopérer avec l'organe d'entraînement supérieur 32' occupant la position rentrée.

Le fonctionnement de ce deuxième exemple de réalisation de la présente invention est comparable pour l'utilisateur au fonctionnement du premier exemple de réalisation.

L'organe d'entraînement supérieur 32' entraîne directement l'enveloppe extérieure tubulaire 30'. L'élément interne de sécurité 33' peut être mobile en rotation par rapport à l'organe d'entraînement supérieur 32' et à l'enveloppe extérieure tubulaire 30'.

L'accessoire 2' ainsi proposé ne requiert pas non plus de dispositif de sécurité coopérant avec un dispositif de détection agencé dans le boîtier moteur 1.

A titre de variante, l'outil de travail 31, 31' pourrait être amovible de l'enveloppe extérieure tubulaire 30, 30'.

A titre de variante, le couvercle 5 ; 5' pourrait être dépourvu de mécanisme d'entraînement 15, la sortie d'entraînement 10 du boîtier moteur 1 étant alors prévue pour coopérer directement avec l'organe d'entraînement supérieur 32, 32' de l'ensemble de travail rotatif 4, 4'.

A titre de variante, le boîtier moteur 1 pourrait être solidaire du couvercle 5 ; 5'.

A titre de variante, l'élément interne de sécurité 33, 33' peut présenter un jeu axial avec l'organe d'entraînement supérieur 32, 32' et/ou avec l'enveloppe extérieure tubulaire 30, 30'.

A titre de variante, l'élément interne de sécurité 33, 33' en position abaissée n'est pas nécessairement solidaire en rotation de l'organe d'entraînement supérieur 32, 32' et/ou de l'enveloppe extérieure tubulaire 30, 30'.

A titre de variante, l'élément interne de sécurité 33' en position relevée n'est pas nécessairement solidaire en rotation de l'organe d'entraînement supérieur 32' et/ou de l'enveloppe extérieure tubulaire 30'.

A titre de variante, l'organe d'entraînement supérieur 32' n'est pas nécessairement solidaire en rotation de l'enveloppe extérieure tubulaire 30' lorsque l'élément interne de sécurité 33' occupe la position relevée.

La présente invention n'est nullement limitée aux exemples de réalisation décrits et à leurs variantes, mais englobe de nombreuses modifications dans le cadre des revendications.

## Revendications

1. Ensemble de travail rotatif (4 ; 4') comportant un organe d'entraînement supérieur (32 ; 32'), une enveloppe extérieure tubulaire (30 ; 30'), un élément interne de sécurité (33 ; 33') monté mobile axialement dans l'enveloppe extérieure tubulaire (30 ; 30') contre un moyen de rappel élastique (34 ; 34') entre une position de repos abaissée et une position relevée, l'élément interne de sécurité (33 ; 33') présentant une cavité de guidage inférieure (54 ; 54'), **caractérisé en ce que** l'élément interne de sécurité (33 ; 33') retient axialement l'organe d'entraînement supérieur (32 ; 32') et **en ce que** l'organe d'entraînement supérieur (32 ; 32') est apte à entraîner l'enveloppe extérieure tubulaire (30 ; 30') lorsque l'élément interne de sécurité (33 ; 33') occupe la position relevée.

2. Ensemble de travail rotatif (4) selon la revendication 1, **caractérisé en ce que** l'élément interne de sécurité (33) occupant la position relevée est solidaire en rotation de l'organe d'entraînement supérieur (32) et de l'enveloppe extérieure tubulaire (30).

3. Ensemble de travail rotatif (4) selon la revendication 2, **caractérisé en ce que** l'élément interne de sécurité (33) est monté coulissant dans l'enveloppe extérieure tubulaire (30).

4. Ensemble de travail rotatif (4) selon l'une des revendications 2 ou 3, **caractérisé en ce que** l'organe d'entraînement supérieur (32) est fixé à l'élément interne de sécurité (33).

5. Ensemble de travail rotatif (4') selon la revendication 1, **caractérisé en ce que** l'organe d'entraînement supérieur (32') est solidaire en rotation de l'enveloppe extérieure tubulaire (30') lorsque l'élément interne de sécurité (33') occupe la position relevée.

6. Ensemble de travail rotatif (4') selon la revendication 5, **caractérisé en ce que** l'organe d'entraînement supérieur (32') est monté coulissant dans l'enveloppe extérieure tubulaire (30').

7. Ensemble de travail rotatif (4 ; 4') selon l'une des revendications 1 à 6, **caractérisé en ce que** l'organe d'entraînement supérieur (32 ; 32') est monté dans une tête creuse (39 ; 39') de l'enveloppe extérieure tubulaire (30 ; 30').

8. Ensemble de travail rotatif (4 ; 4') selon l'une des revendications 1 à 7, **caractérisé en ce que** l'organe d'entraînement supérieur (32 ; 32') dépasse de l'enveloppe extérieure tubulaire (30 ; 30') lorsque l'élément interne de sécurité (33 ; 33') occupe la position relevée.

9. Ensemble de travail rotatif (4 ; 4') selon l'une des revendications 1 à 8, **caractérisé en ce que** l'extrémité inférieure de l'élément interne de sécurité (33 ; 33') occupant la position de repos abaissée est logée dans l'enveloppe extérieure tubulaire (30 ; 30').

10. Accessoire (2 ; 2') pour appareil électroménager de préparation culinaire, comprenant un récipient de travail (3 ; 3') comportant un fond (20 ; 20') présentant une tige de guidage (22 ; 22'), un ensemble de travail rotatif (4 ; 4') prévu pour être mis en place sur la tige de guidage (22 ; 22'), et un couvercle (5 ; 5') prévu pour fermer le récipient de travail (3 ; 3'), **caractérisé en ce que** l'ensemble de travail rotatif (4 ; 4') est conforme à l'une des revendications 1 à 9.

11. Appareil électroménager de préparation culinaire, comprenant un récipient de travail (3 ; 3') comportant un fond (20 ; 20') présentant une tige de guidage (22 ; 22'), un ensemble de travail rotatif (4 ; 4') prévu pour être mis en place sur la tige de guidage (22 ; 22'), un couvercle (5 ; 5') prévu pour fermer le récipient de travail (3 ; 3') et un boîtier moteur (1) prévu pour entraîner en rotation l'ensemble de travail rotatif (4 ; 4') disposé dans le récipient de travail (3 ; 3') fermé par le couvercle (5 ; 5'), **caractérisé en ce que** l'ensemble de travail rotatif (4 ; 4') est conforme à l'une des revendications 1 à 9.

12. appareil électroménager de préparation culinaire selon la revendication 11, **caractérisé en ce que** le boîtier moteur (1) est amovible par rapport au couvercle (5 ; 5').

## Claims

1. Rotary working assembly (4; 4') comprising an upper drive element (32; 32'), a tubular outer jacket (30; 30'), an internal safety component (33; 33') mounted with axial mobility inside the tubular outer jacket (30; 30') against an elastic return means (34; 34') between a lowered rest position and a raised position, the internal safety element (33; 33') having a lower guide cavity (54; 54'), **characterised in that** the internal safety element (33; 33') retains the upper drive element (32; 32') in its axial position and **in that** the upper drive element (32; 32') can turn the tubular outer jacket (30; 30') when the internal safety element (33; 33') is raised.

2. Rotary working assembly (4) according to claim 1, **characterised in that** the internal safety element (33) in its raised position is rotatably integral with the upper drive element (32) and the tubular outer jacket (30).

3. Rotary working assembly (4) according to claim 2, **characterised in that** the internal safety element (33) is slidably mounted inside the tubular outer jacket (30).

4. Rotary working assembly (4) according to one of claims 2 or 3, **characterised in that** the upper drive element (32) is fixed to the internal safety element (33).

5. Rotary working assembly (4') according to claim 1, **characterised in that** the upper drive element (32') is rotatably integral with the tubular outer jacket (30') when the internal safety element (33') is in its raised position.

6. Rotary working assembly (4') according to claim 5, **characterised in that** the upper drive element (32') is slidably mounted inside the tubular outer jacket (30').

7. Rotary working assembly (4; 4') according to one of claims 1 to 6, **characterised in that** the upper drive element (32; 32') is mounted inside a hollow head (39; 39') of the tubular outer jacket (30; 30').

8. Rotary working assembly (4; 4') according to one of claims 1 to 7, **characterised in that** the upper drive element (32; 32') extends out of the tubular outer jacket (30; 30') when the internal safety element (33; 33') is in its raised position.

9. Rotary working assembly (4; 4') according to one of claims 1 to 8, **characterised in that** the lower end of the internal safety element (33; 33') in its lowered rest position is housed inside the tubular outer jacket (30; 30').

10. Accessory (2; 2') for electrical household food preparation appliance, comprising a working container (3; 3') comprising a bottom (20; 20') with a guide rod (22; 22'), a rotary working assembly (4; 4') to be placed on the guide rod (22; 22'), and a lid (5; 5') to close the working container (3; 3'), **characterised in that** the rotary working assembly (4; 4') conforms to one of claims 1 to 9.

11. Electrical household food preparation appliance, comprising a working container (3; 3') comprising a bottom (20; 20') with a guide rod (22; 22'), a rotary working assembly (4; 4') to be placed on the guide rod (22; 22'), and a lid (5; 5') to close the working container (3; 3') and a motor housing (1), to drive rotatably the rotary working assembly (4; 4') arranged inside the working container (3; 3') closed by the lid (5; 5'), **characterised in that** the rotary working assembly (4; 4') conforms to one of claims 1 to 9.

12. Electrical household food preparation appliance according to claim 11, **characterised in that** the motor housing (1) is removable from the lid (5; 5').

## Patentansprüche

1. Drehende Arbeitseinheit (4 ; 4'), umfassend ein oberes Antriebsorgan (32 ; 32'), eine röhrenförmige Außenummantelung (30 ; 30'), ein internes Sicherheitselement (33 ; 33'), das in der röhrenförmigen Außenummantelung (30 ; 30') gegen ein elastisches Rückholmittel (34 ; 34') zwischen einer herabgesetzten Ruheposition und einer erhobenen Position axial beweglich befestigt ist, wobei das interne Sicherheitselement (33 ; 33') eine untere Führungsaussparung (54 ; 54') aufweist, **dadurch gekennzeichnet, dass** das interne Sicherheitselement (33; 33') das obere Antriebsorgan (32 ; 32') axial zurückhält und **dadurch**, dass das obere Antriebsorgan (32 ; 32') imstande ist, die röhrenförmige Außenummantelung (30 ; 30') anzutreiben, wenn das interne Sicherheitselement (33 ; 33') die erhobene Position einnimmt.

2. Drehende Arbeitseinheit (4) nach Anspruch 1, **dadurch gekennzeichnet, dass** das interne Sicherheitselement (33), das die erhobene Position einnimmt, drehfest mit dem oberen Antriebsorgan (32) und der röhrenförmigen Außenummantelung (30) verbunden ist.

3. Drehende Arbeitseinheit (4) nach Anspruch 2, **dadurch gekennzeichnet, dass** das interne Sicherheitselement (33) gleitend in der röhrenförmigen Außenummantelung (30) befestigt ist.

4. Drehende Arbeitseinheit (4) nach einem der Ansprüche 2 oder 3, **dadurch gekennzeichnet, dass** das obere Antriebsorgan (32) am internen Sicherheitselement (33) festgemacht ist.

5. Drehende Arbeitseinheit (4') nach Anspruch 1, **dadurch gekennzeichnet, dass** das obere Antriebsorgan (32') drehfest mit der röhrenförmigen Außenummantelung (30') verbunden ist, wenn das interne Sicherheitselement (33') die erhobene Position einnimmt.

6. Drehende Arbeitseinheit (4') nach Anspruch 5, **dadurch gekennzeichnet, dass** das obere Antriebsorgan (32') gleitend in der röhrenförmigen Außenummantelung (30') befestigt ist.

7. Drehende Arbeitseinheit (4 ; 4') nach einem der Ansprüche 1 bis 6, **dadurch gekennzeichnet, dass** das obere Antriebsorgan (32 ; 32') in einem hohlen Kopf (39 ; 39') der röhrenförmigen Außenummantelung (30 ; 30') befestigt ist.

8. Drehende Arbeitseinheit (4 ; 4') nach einem der Ansprüche 1 bis 7, **dadurch gekennzeichnet, dass** das obere Antriebsorgan (32 ; 32') über die röhrenförmige Außenummantelung (30 ; 30') hinausragt, wenn das interne Sicherheitselement (33 ; 33') die erhobene Position einnimmt.

9. Drehende Arbeitseinheit (4 ; 4') nach einem der Ansprüche 1 bis 8, **dadurch gekennzeichnet, dass** das untere Ende des internen Sicherheitselements (33 ; 33'), das die herabgesetzte Ruheposition einnimmt, in der röhrenförmigen Außenummantelung (30 ; 30') untergebracht ist.

10. Zubehör (2 ; 2') für ein Elektrohaushaltsgerät für kulinarische Zubereitungen, umfassend einen Arbeitsbehälter (3 ; 3') mit einem Boden (20 ; 20'), der einen Führungszapfen (22 ; 22') aufweist, eine drehende Arbeitseinheit (4 ; 4'), die dafür vorgesehen ist, um auf dem Führungszapfen (22 ; 22') angeordnet zu werden, und einen Deckel (5 ; 5'), der dafür vorgesehen ist, um den Arbeitsbehälter (3 ; 3') zu verschließen, **dadurch gekennzeichnet, dass** die drehende Arbeitseinheit (4 ; 4') einem der Ansprüche 1 bis 9 entspricht.

11. Elektrohaushaltsgerät für kulinarische Zubereitungen, umfassend einen Arbeitsbehälter (3 ; 3') mit einem Boden (20 ; 20'), der einen Führungszapfen (22 ; 22') aufweist, eine drehende Arbeitseinheit (4 ; 4'), die dafür vorgesehen ist, um auf dem Führungszapfen (22 ; 22') angeordnet zu werden, einen Deckel (5 ; 5'), der dafür vorgesehen ist, um den Arbeitsbehälter (3 ; 3') zu verschließen, und ein Motorgehäuse (1), das dafür vorgesehen ist, die drehende Arbeitseinheit (4 ; 4'), die im Arbeitsbehälter (3 ; 3'), der vom Deckel (5 ; 5') verschlossen ist, angeordnet ist, in Drehung zu versetzen, **dadurch gekennzeichnet, dass** die drehende Arbeitseinheit (4 ; 4') einem der Ansprüche 1 bis 9 entspricht.

12. Elektrohaushaltsgerät für kulinarische Zubereitungen nach Anspruch 11, **dadurch gekennzeichnet, dass** das Motorgehäuse (1) in Bezug auf den Deckel (5 ; 5') abnehmbar ist.
